# EUROPÄISCHE PATENTANMELDUNG

(11) **EP 1 878 644 A2**
(43) Veröffentlichungstag der Anmeldung: **16.01.2008**
(21) Anmeldenummer: 07013380.6
(22) Anmeldetag: 09.07.2007
(51) Int. Cl.: B62J 1/00

(54) **Verfahren und Doubliergerät zur Herstellung eines individuell angefertigten Fahrradsattels**

(30) Priorität: 11.07.2006 DE 102006031934
(71) Anmelder: Binder, Dirk, 44579 Castrop-Rauxel (DE)
(72) Erfinder: Binder, Dirk, 44579 Castrop-Rauxel (DE)
(74) Vertreter: Isfort, Olaf

(57) **Zusammenfassung**

Gegenstand der Erfindung ist ein Verfahren, bei dem die anatomischen Gegebenheiten des Fahrers durch eine Abdrucknahme dargestellt und in einen Schaumstoff umgesetzt werden. Durch eine exakte Abformung des Gesäßes, mit der Erfassung der druckempfindlichen Bereiche wie Beckenknochen und Dammbereich und die Umsetzung in einen Schaumstoff wird die Auflagefläche vergrößert und Druckspitzen werden abgebaut. Durch die Verwendung von Abdruckmaterialien unterschiedlicher Plastizität ist es möglich, sowohl die Sitzhöcker des Beckenknochens abzuformen als auch die Weichteile des Dammbereichs zu erfassen und zu entlasten.

## Beschreibung

Die Erfindung bezieht sich auf die Herstellung eines individuell angefertigten Fahrradsattels sowie auf ein Doubliergerät zur Durchführung dieses Verfahrens.

Eines der größten Probleme im Radsport ist die Wahl des richtigen Sattels. Umfragen zufolge leiden 50% aller Radfahrer unter Sitzproblemen. Angefangen bei Druckstellen, reicht die Palette der Beschwerden über Abszesse und Taubheitsgefühl bis hin zur Impotenz. Die Industrie begegnet dem mit einer Vielzahl von verschiedenen Konstruktionen und Materialien. Aufwändige Polsterungen mit Gelkissen sind dem sportlichen Fahrer zu schwer und vermitteln ein sesselartiges Fahrgefühl. Weiche Schaumstoffauflagen wirken im ersten Augenblick komfortabel, doch führt das Einsinken in die Polsterung auf Dauer zu Druckstellen. Aussparungen im Dammbereich reduzieren die Auflagefläche und rufen Druckstellen im Randbereich hervor. Konfektionsware bringt in diesem Bereich nicht die optimale Lösung für den Einzelnen. Auch die Berücksichtigung des Beckenknochenabstands bei der Auswahl des Sattels begegnet der Problematik nur unzureichend.

Ein anderer, in der DE 201 12 013 U1 beispielhaft geschilderter Weg wird bei der Herstellung von Sätteln unter Zuhilfenahme von Druckmessfolien beschritten. Dabei nimmt der Fahrer auf einem mit einer Druckmessfolie bezogenen Sattel Platz. Druckspitzen werden elektronisch erfasst und nehmen Einfluss auf die Gestaltung der Satteloberfläche. Von Nachteil bei diesem Verfahren ist, dass die Sattel basis Einfluss auf das Messergebnis hat. Anders gesagt, eine andere Sattel basis ergibt ein anderes Messergebnis.

Aus der US 5 165 752 ist ein Damensattel bekannt, der mit zwei verschiedenen Polstermaterialien beschlagen ist, die unterschiedliche mechanische Kennwerte aufweisen. Dieser Sattel ist auf die weibliche Anatomie im Allgemeinen spezialisiert, nimmt aber als industrielles Massenprodukt nicht auf die biometrischen Besonderheiten der einzelnen Radfahrerin Rücksicht.

In der DE 43 27 234 A1 wird beiläufig die Idee formuliert, die Polsterung eines Fahrradsattels ganz oder teilweise anatomisch individuell zu schäumen. Eine konkrete Lehre zur Umsetzung dieser Idee wird jedoch nicht angeben.

Der vorliegenden Erfindung liegt die Aufgabe zu Grunde ein Verfahren anzugeben, mit welchem ein individuell auf die Anatomie einer bestimmten Person angepasster Fahrradsattel kostengünstig herstellbar ist.

Gelöst wird diese Aufgabe durch ein Verfahren, bei dem die anatomischen Gegebenheiten des Fahrers durch eine Abdrucknahme dargestellt und in einen Schaumstoff umgesetzt werden. Durch eine exakte Abformung des Gesäßes, mit der Erfassung der druckempfindlichen Bereiche wie Beckenknochen und Dammbereich und die Umsetzung in einen Schaumstoff wird die Auflagefläche vergrößert und Druckspitzen werden abgebaut, Durch die Verwendung von Abdruckmaterialien unterschiedlicher Plastizität ist es möglich, sowohl die Sitzhöcker des Beckenknochens abzuformen als auch die Weichteile des Dammbereichs zu erfassen und zu entlasten.

Die Sattelschale wird in dem Bereich auf dem die Sitzhöcker des Beckenknochens lasten mit Abdruckmaterial von geringer Plastizität und die Bereiche welche die Weichteile des Dammbereichs aufnehmen mit Abdruckmasse von hoher Plastizität versehen. Somit formen sich die Beckenknochen, welche für die Aufnahme des Körpergewichts bestens geeignet sind, optimal ab und verhindern so die Entstehung von Druckspitzen. Die druckempfindlichen Weichteile hingegen, verschaffen sich während der Abdrucknahme den Raum, den sie benötigen, um ein Abquetschen der Blutgefäße und Nervenbahnen zu verhindern.

Zur Abdrucknahme, welche auf einem Fahrrad oder bevorzugt auf einem Hometrainer durchgeführt wird, dessen Geometrie auf die gewohnten Bedürfnisse des Fahrers eingestellt ist, nimmt der Fahrer auf dem mit Abdruckmasse versehenen Sattel Platz. Durch den Druck des Körpergewichts und das Spiel der Muskulatur beim Fahren, wird eine detailgetreue Abformung erreicht.

Nach der Abformung wird das Abdruckmaterial, das sich über die Sattelschale hinausgepresst hat, gezielt entfernt. Nun wird der Sattel in ein Doubliergerät gesetzt und mit dem Bodenteil verschraubt. Das Bodenteil weist eine Öffnung auf, durch welche das Gestell des Sattels ragt, um mit der Arretiervorrichtung verbunden zu werden. Das Verschrauben erfolgt durch eine Arretiervorrichtung, welche durch Drehen einer Flügelschraube den Sattel an das Bodenteil zieht.

Die Arretiervorrichtung besteht aus einer bügelförmigen Kralle welche das Sattelgestell erfasst, einer rechteckigen Metallplatte als Konterelement, welche in ihrer Mitte eine Bohrung aufweist und einer Flügelschraube, welche die einzelnen Teile miteinander verbindet und beim Drehen die Vorrichtung spannt. Das Bodenteil des Doubliergerätes entspricht in der Form der Unterseite der Sattelschale und schließt somit bündig mit dem Sattel ab. An den Seiten rund um den Sattel überragen die Wände des Doubliergeräts in einem Winkel von 73° den arretierten Sattel um 5 cm. Das Doubliergerät steht auf drei Füßen, von denen sich ein Fuß unter dem vorderen verjüngten Teil und die beiden anderen unter dem hinteren breiten Teil befindet. Nun wird der Sattel in dem Doubliergerät mit Hartgips übergossen und bis zum Rand gefüllt.

Die Verarbeitung des Gipses richtet sich nach den Herstellerangaben. Nach der Abbindezeit des Gipses wird die Arretierschraube, welche den Sattel an das Doubliergerät fixiert, gelöst und der überguss aus Gips von dem Doubliergerät getrennt. Aus dem Gipsüberguss ist nun die Negativform entstanden, weiche für die Umsetzung des Abdrucks in die Schaumstoffauflage unerlässlich ist. Durch die konische Bauweise des Doubliergeräts mit den um 73° abgewinkelten Wänden wird das Entformen des Gipsblocks vereinfacht.

Nach dem Entformen wird die Sattelschale vom Gipsüberguss getrennt, das Abdruckmaterial entfernt und der nun entstandene Hohlraum nach Repositionierung der Sattelschale entweder durch Bohrungen im Gipsüberguss oder in der Sattelschale mit einem geeigneten Schaumstoff ausgeschäumt.

Ein Vorteil dieses Verfahrens ist darin zu sehen, dass die Abdrucknahme an einem anderen Ort durchgeführt werden kann als die Abformung und Ausschäumung. So wird die Abdrucknahme bevorzugt beim Fahrradfachhändler durchgeführt, den die Person hierzu aufsucht. Nach Abdrucknahme sendet der Händler den Abdruck zu einem Produktionsbetrieb, der den Gips abformt und den Sattel schäumt. Der fertige Sattel wird zurück zum Händler gesandt. Auf diese Weise können viele Radfahrer mit einem individuellen Sattel versorgt werden, ohne weite Wege in Kauf nehmen zu müssen.

Nachfolgend wird die Erfindung unter Bezugnahme auf die anliegenden Zeichnungen näher erläutert. Hierfür zeigen:
- Fig. 1:: eine schematische Draufsicht des Fahrradsattels im Doubliergerät;
- Fig. 2:: eine Schnittansicht des Fahrradsattels im Doubliergerät;
- Fig. 3:: eine Schnittansicht durch die Arratiervorrichtung;
- Fig. 4:: eine schematische Draufsicht auf den mit Abdruckmaterial versehenen Fahrradsattel;
- Fig. 5:: eine schematische Seitenansicht auf den mit Abdruckmaterial versehenen Fahrradsattel.

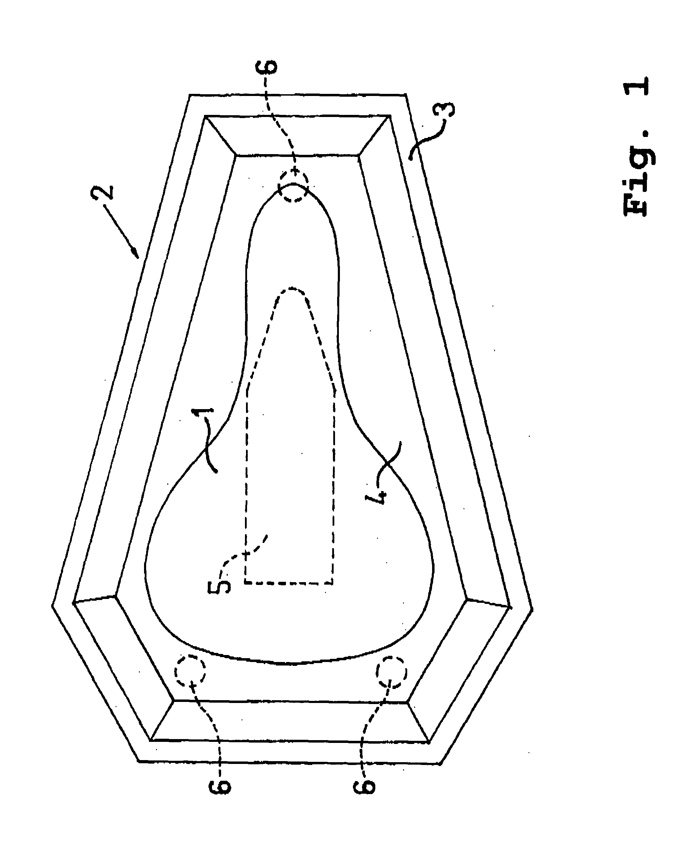

Fig. 1 zeigt die Lage des Sattels 1 im Doubliergerät 2 in der Draufsicht. Die Seitenwände 3 des Doubliergerätes überragen den Sattel in einem Winkel von 73° um 5 cm. Der Sattel liegt auf dem Bodenteil 4 und verdeckt die darunter liegende Öffnung 5 für das Sattelgestell. Unter dem Bodenteil sind drei Füße 6 angebracht, von denen sich einer im vorderen und die beiden anderen im hinteren Teil befinden.

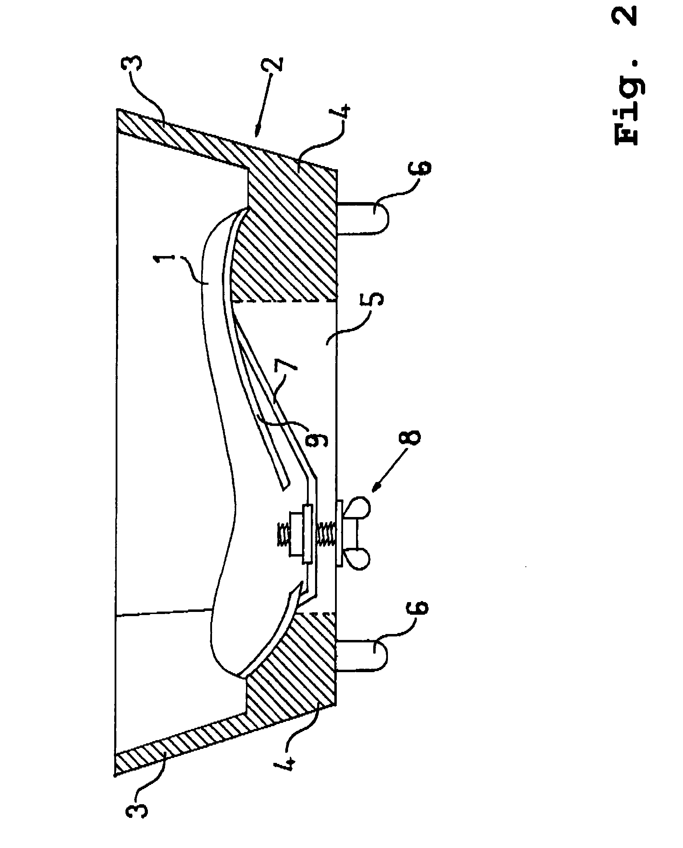

Fig. 2 zeigt den im Doubliergerät arretierten Sattel in der Seitenansicht. Das Sattelgestell 7 ragt durch das Bodenteil und ist über die Arretiervorrichtung 8 mit dem Doubliergerät verschraubt. Dabei schließt die Unterseite der Sattelschale 9 bündig mit dem Bodenteil ab.

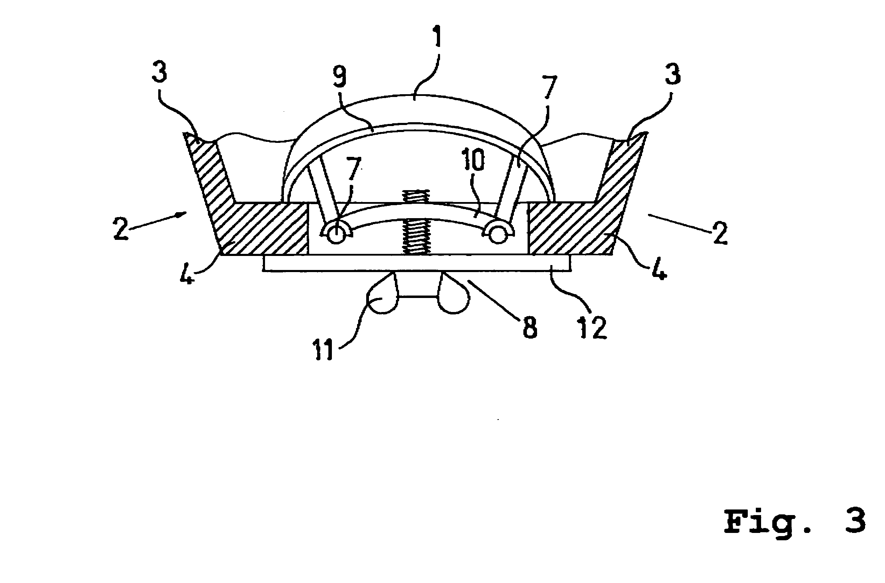

Fig. 3 zeigt die Schnittansicht durch die Arretiervorrichtung. Die bügelförmige Kralle 10 greift das Gestell des Fahrradsattels. In der Mitte der Kralle 10 befindet sich ein Innengewinde, welches das Gewinde der Flügelschraube 11 aufnimmt. Unter dem Bodenteil des Doubliergerätes kontert eine rechteckige Metallplatte 12, welche in der Mitte eine Bohrung aufweist, die Arretiervorrichtung. Durch Drehen der Flügelschraube zieht sich der Sattel an das Bodenteil, dichtet das Doubliergerät ab und verhindert somit das Auslaufen des Gipses beim Ausgießen.

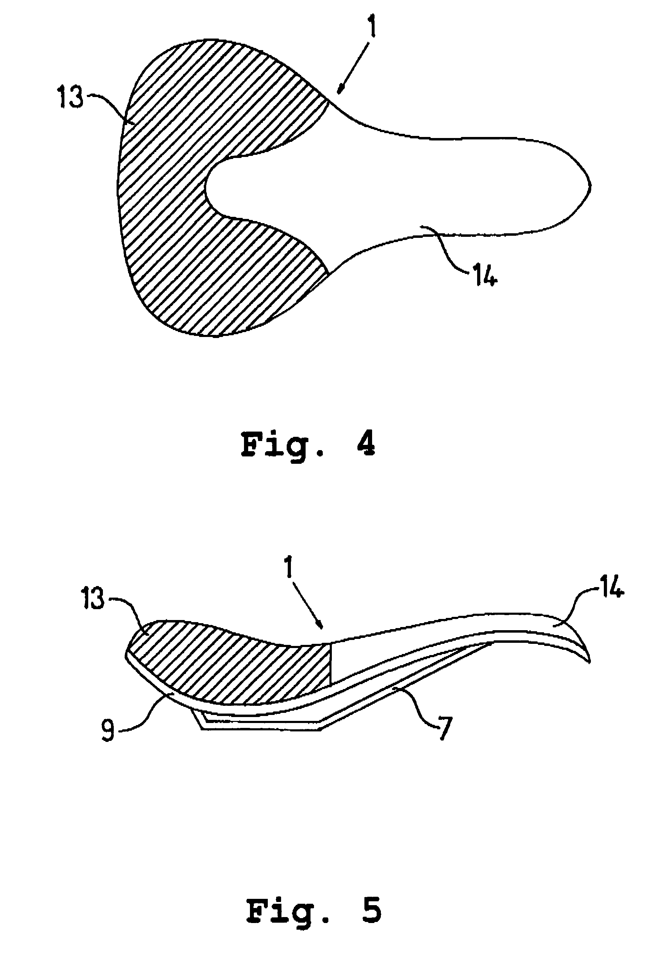

Fig. 4 zeigt den mit Abdruckmaterial versehenen Fahrradsattel in der Draufsicht. Der hintere Teil des Sattels, auf dem die Sitzhöcker des Beckenknochens lasten ist mit Abdruckmaterial von geringer Plastizität 13 und der mittlere bis vordere welche die Weichteile des Dammbereichs aufnehmen mit Abdruckmaterial von hoher Plastizität 14 versehen.

Fig. 5 zeigt den mit Abdruckmaterial von unterschiedlicher Plastizität versehenen Fahrradsattel in der Seitenansicht. Die Anordnung der Materialien entspricht der in Fig. 4 beschriebenen.

Eine Sattelschale ist entsprechend der anatomischen Gegebenheiten des Fahrers mit Abdruckmaterial von unterschiedlicher Plastizität versehen. Der Fahrer nimmt in der ihm gewohnten Sitzposition auf dem Sattel Platz und verformt das Abdruckmaterial durch sein Körpergewicht und die Bewegungen, welche er beim Fahren auf dem Fahrrad oder Hometrainer ausübt. Die entstandene Abformung wird nach einer Nachbearbeitung in das Doubliergerät gesetzt, mittels der Arretiervorrichtung mit ihm verschraubt und mit Hartgips übergossen. Nach der Abbindezeit des Gipses wird die Arretiervorrichtung gelöst und der Gipsüberguss vom Doubliergerät getrennt.

Nachdem das Abdruckmaterial entfernt wurde, kann nach erfolgter Repositionierung der Sattelschale in den Gipsüberguss, welche die Negativform des Abdrucks darstellt, der entstandene Hohlraum durch Bohrungen im Gipsüberguss oder in der Sattelschale mit Schaumstoff ausgeschäumt werden.

## Patentansprüche

1. Verfahren zur Herstellung eines der Anatomie einer bestimmten Person individuell angepassten Fahrradsattels (1), bei dem zunächst eine Sattelschale (9) mit mindestens einem Abdruckmaterial (13) versehen wird, bei dem dann die Person auf dem Abdruckmaterial (13) Platz nimmt, wodurch ein Abdruck des Gesäßes der Person in dem Abdruckmaterial (13) entsteht, bei dem dann eine Negativform des Fahrradsattels (1) von dem Abdruckmaterial (13) abgeformt wird, bei dem nun das Abdruckmaterial (13) von der Sattelschale (9) entfernt und die Negativform auf die vom Abdruckmaterial (13) befreite Sattelschale (9) aufgesetzt wird, sodass ein von Negativform und Sattelschale umschlossener Hohlraum entsteht, und bei dem schließlich der Hohlraum mit einem Schaumstoff ausgeschäumt wird.

2. Verfahren nach Anspruch 1, **dadurch gekennzeichnet, dass** die Sattelschale (9) mit mindestens zwei Abdruckmaterialien (13,14) versehen wird, wobei die Plastizität des einen Abdruckmaterials (13) geringer ist als die Plastizität des anderen Abdruckmaterials (14).

3. Verfahren nach Anspruch 1 oder 2, **dadurch gekennzeichnet, dass** die Sattelschale (9) mit dem Abdruckmaterial (13, 14) auf einem mit Lenker und Pedalen versehenen Hometrainer montiert ist, und dass die auf dem Abdruckmaterial (13, 14) Platz nehmende Person den Lenker umfasst und zugleich in die Pedale tritt.

4. Verfahren nach Anspruch 1, 2 oder 3, **dadurch gekennzeichnet, dass** das Abdruckmaterial (13, 14), das sich bei der Abdrucknahme über die Sattelschale (9) hinaus gequetscht hat, gezielt entfernt wird.

5. Fahrradsattel (1), hergestellt nach einem Verfahren gemäß einem der Ansprüche 1 bis 4.

6. Doubliergerät (2) für die Herstellung eines individuellen Fahrradsattels (1), mit einem eine Öffnung (5) aufweisenden Bodenteil (4), wobei das Doubliergerät an seinen Umfang mit aus dem Bodenteil (4) herauswachsenden Seitenwänden (3) umgrenzt ist, und mit einer Arretiervorrichtung (8), mittels welcher eine auf die Öffnung (5) aufgelegte, mit ihrer Unterseite mit dem Bodenteil (4) bündig abschließende Sattelschale (9) an dem Bodenteil (4) arretierbar ist.

7. Doubliergerät (2) nach Anspruch 6, **dadurch gekennzeichnet, dass** die Arretiervorrichtung (8) eine bügelförmige Kralle (10), ein gelochtes Konterelement (12) und eine Schraube (11) umfasst, wobei die Kralle (10) ein an der Unterseite der Sattelschale (9) angeordnetes Sattelgestell (7) erfasst, wobei das Konterelement (12) an der Unterseite des Bodenteils (4) anliegt, und wobei die Schraube (11) mit Ihrem Kopf von unten an dem Konterelement (12) anliegt, mit ihrem Schaft das Konterelement (12) und die Öffnung (5) durchgreift und mit ihrem Gewinde in die Kralle (10) eingeschraubt ist.

8. Doubliergerät (2) nach Anspruch 6 oder 7, **dadurch gekennzeichnet, dass** die Seitenwände (3) mit dem Bodenteil (4) einen Winkel von 73° einschließen.

9. Doubliergerät (2) nach Anspruch 6, 7 oder 8, **dadurch gekennzeichnet, dass** die Seitenwände (3) den am Bodenteil (4) arretierten Fahrradsattel (1) überragen.
